# EUROPÄISCHE PATENTSCHRIFT

(11) **EP 3 530 812 B1**
(45) Veröffentlichungstag und Bekanntmachung des Hinweises auf die Patenterteilung: **16.06.2021**
(21) Anmeldenummer: 19158602.3
(22) Anmeldetag: 21.02.2019
(51) Int. Cl.: E02D 7/28, E21B 3/02, E21B 7/02, E21B 11/02, E02D 13/04, E02D 13/06, E21B 3/025, E21B 44/00, E02D 27/26, E02D 27/28, E21B 7/20

(54) **ANBAUGERÄT FÜR BOHR- UND/ODER GRÜNDUNGSARBEITEN**
ATTACHMENT FOR DRILLING AND/OR FOUNDATION WORK
ÉQUIPEMENT POUR TRAVAUX DE FORAGE ET / OU DE FONDATION

(30) Priorität: 26.02.2018 DE 102018104332
(43) Veröffentlichungstag der Anmeldung: 28.08.2019
(73) Patentinhaber: Liebherr-Werk Nenzing GmbH, 6710 Nenzing (AT)
(72) Erfinder: Mendler, Maximilian, 6800 Feldkirch (AT); Wedl, Sebastian, 6800 Feldkirch (AT); Schwarzhans, Andreas, 6780 Schruns (AT); Englstler, Armin, 6752 Dalaas (AT); Schneider, Bernhard, 6833 Klaus (AT); Griesemer, Tobias, 6710 Nüziders (AT)
(74) Vertreter: Laufhütte, Dieter

(56) Entgegenhaltungen:
- DE-A1-102015 105 908
- DE-B3- 10 360 912
- JP-A- S5 915 124

## Beschreibung

Die Erfindung betrifft ein Anbaugerät für Bohr- und/oder Gründungsarbeiten, insbesondere eine Verrohrungs- oder Rohrdrehmaschine, mit einer Aufnahmevorrichtung zum Einspannen wenigstens eines Rohres und einem Antrieb zur Erzeugung einer Rotationsbewegung des eingespannten Rohres.

Beim Greiferbohren mit einem Anbaugerät in Form einer Verrohrungsmaschine/Rohrdrehmaschine arbeiten zwei an und für sich unabhängige Geräte gemeinsam am Erstellen eines Pfahls. Die Trägermaschine in Form eines Seilbaggers umfasst einen Greifer zum Ausheben eines Lochs. Eine ebenfalls am Seilbagger befestigte Verrohrungsmaschine/Rohrdrehmaschine dient zum Einspannen der Verrohrung, die durch Rotationsbewegungen synchron zum Aushub in den Boden eingebracht werden soll.

Nach aktuellem Stand der Technik werden entsprechende Verrohrungsmaschinen/Rohrdrehmaschinen direkt elektrisch angesteuert. Über ein Bedienfeld der Maschine kann der Bediener die Aktoren der Verrohrungsmaschine/Rohrdrehmaschine unmittelbar betätigen. Eine Steuerungslogik zur selbständigen Ausführung von Funktionen ist bislang nicht vorgesehen. Dies ist nicht nur wenig komfortabel für den Bediener, sondern birgt auch ein gewisses Sicherheitsrisiko, da Fehlbedienungen durch den Bediener weder erkannt noch ausgeschlossen werden können. Demzufolge verlangt die Bedienung einer Verrohrungsmaschine/Rohrdrehmaschine eine ausreichende Expertise. Bekannte Verrohrungsmaschinen sind in den Dokumenten DE 10 2015 105908 A1, DE 103 60 912 B3 und JP S59 15124 A beschrieben.

Die Aufgabe der vorliegenden Erfindung besteht also darin, ein gattungsgemäßes Anbaugerät sowohl hinsichtlich des Bedienkomforts als auch der Betriebseffizienz zu verbessern.

Gelöst wird diese Aufgabe durch ein Anbaugerät gemäß den Merkmalen des Anspruchs 1. Vorteilhafte Ausgestaltungen des Anbaugerätes sind Gegenstand der abhängigen Ansprüche.

Erfindungsgemäß wird ein gattungsgemäßes Anbaugerät um wenigstens ein integrales Steuergerät mit einer Steuerlogik zur selbstständigen, insbesondere vollautomatischen Ausführung wenigstens einer Steuerungsfunktion des Anbaugerätes ergänzt. Bisher wurden die Aktoren des Anbaugerätes durch Benutzereingaben unmittelbar betätigt. Auf diese Weise waren eine Überwachung der ausgeführten Operationen des Arbeitsgerätes sowie eine automatisierte Einstellung gewisser Betriebsbedingungen nicht möglich, dies musste stattdessen alles vom Bediener selbst übernommen werden. Das erfindungsgemäße Anbaugerät mit entsprechender Steuerlogik erlaubt eine selbstständige Ausführung von Steuerungsfunktionen, ohne dass hierfür eine manuelle Bedieneingabe notwendig ist. Insbesondere sieht die Steuerlogik einen programmatischen Ablauf von mehreren Steuerbefehlen zur Aktorbetätigung vor. Die Steuerlogik kann demzufolge als Softwareprogramm im Steuergerät hinterlegt sein. Das Steuergerät selbst umfasst zumindest eine geeignete Recheneinheit zur Ausführung einer Softwareroutine und/oder digitalen Verarbeitung eingehender Signale/Daten.

Gemäß vorteilhafter Ausführungsform des Anbaugerätes ist vorgesehen, dass dieses ein oder mehrere Sensoren umfasst, die mit dem Steuergerät in Verbindung stehen. Das Steuergerät kann folglich generierte Messdaten von den Sensoren abrufen. Ferner ist das Steuergerät geeignet, bereitgestellte Sensordaten auszuwerten und optional für die Ausführung der Steuerungsfunktionen zu berücksichtigen.

Geeignete Sensoren sind beispielsweise ein Neigungssensor, Bewegungs- oder Beschleunigungssensor, Drucksensoren, etc.. Ein oder mehrere Neigungssensoren können auf oder an einem Maschinentisch zur Aufnahme und Verspannung einer Verrohrung installiert sein. Diese liefern bspw. laufend Messdaten bezüglich der aktuellen Tischneigung an das Steuergerät. Weitere Neigungs- oder Winkelsensoren können an einer Lenkstange bzw. Lenkzylinder zur Erfassung des Zustandes der Lenkstange befestigt sein. Ein oder mehrere Sensoren können zur Überwachung eines Klemmmechanismus des Maschinentisches zum Verspannen des Rohres montiert sein. Konkret können hier Drucksensoren in Klemmzylindern zum Einsatz kommen, deren Messwerte eine Aussage über den Zustand der Rohrverspannung zulassen. Das Steuergerät kann zumindest einen Teil dieser Messdaten im Betrieb laufend abrufen, aufzeichnen und für Steuerungsfunktionen berücksichtigen.

Gemäß dem Gegenstand des Anspruchs 1 umfasst das Anbaugerät zudem eine Kommunikationsschnittstelle, um einen Datenaustausch, vorzugsweise bidirektional, mit der Trägermaschine zu ermöglichen. Bevorzugt ist hier ein Bus-System, insbesondere CAN-Bussystem. Das Steuergerät ist dann derart konfiguriert, um über die Kommunikationsschnittstelle maschinenrelevante Parameter einer Trägermaschine abzurufen. Demzufolge können etwaige Daten, die den laufenden Betrieb der Trägermaschine bzw. deren Konfiguration betreffen, durch das Steuergerät abgerufen und gegebenenfalls weiterverarbeitet werden. Die abgerufenen Daten lassen sich bspw. für die Ausführung von Steuerungsfunktionen berücksichtigen. Auch stellt dies die Grundvoraussetzung für eine Verarbeitung von Steuersignalen der Trägermaschine durch das Steuergerät des Anbaugerätes dar. Demzufolge umfasst das Anbaugerät bzw. Steuergerät die notwendigen technischen Voraussetzungen, um eine externe Ansteuerung des Anbaugerätes durch eine Trägermaschine zu ermöglichen. Bspw. lassen sich Bedienelemente, wie bspw. Masterschalter, und/oder Anzeigemittel der Trägermaschine zur Steuerung des Anbaugerätes nutzen.

Vorstellbar ist es daher auch, maschinenrelevante Parameter des Anbaugerätes über die Kommunikationsschnittstelle bereitzustellen, sodass eine Trägermaschine Zugriff auf die entsprechenden Parameter hat und gegebenenfalls über Anzeigeelemente auf der Trägermaschine ausgeben kann.

Gemäß weiterer Ausführungsform kann das Anbaugerät mit wenigstens einem Anzeigeelement zur Wiedergabe maschinenrelevanter bzw. steuerungsrelevanter Daten ausgestattet sein. Über das Anzeigeelement lässt sich der laufende Prozesszustand des Anbaugerätes visuell darstellen, um den Bedienkomfort der Maschine für den Benutzer zu optimieren. Denkbar ist es ebenfalls, auch solche Daten zur Anzeige zu bringen, die über die Kommunikationsschnittstelle vorab abgerufen worden sind. Dementsprechend kann einem Bediener des Anbaugerätes zusätzlich eine Information bezüglich der Trägermaschine zur Anzeige gebracht werden.

Neben der vorgenannten Kommunikationsschnittstelle kann ergänzend eine Sende- und/oder Empfangseinheit vorgesehen sein, um eine drahtlose oder auch drahtgebundene Kommunikation mit einem externen Gerät anbieten zu können. Idealerweise arbeitet die Sende- und/oder Empfangseinheit nach einem Mobilfunkstandard, sodass ein Datenaustausch mit einem externen Gerät über ein Mobilfunknetz erfolgen kann. Die Sende- und/oder Empfangseinheit ist jedoch nicht auf einen Mobilfunkstandard beschränkt, sondern kann auch nach anderweitigen Protokollen wie WLAN, Bluetooth, NFC, etc. arbeiten.

Das Anbaugerät kann die notwendige elektrische und/oder hydraulische und/oder pneumatische Energie über passende Versorgungsleitungen von der Trägermaschine beziehen. Alternativ oder ergänzend kann das Anbaugerät auch eine eigene Energiequelle umfassen, wie bspw. ein Powerpack.

Wenigstens eine der vorgenannten Steuerungsfunktionen beinhaltet gemäß vorteilhafter Ausführung der Erfindung die Bereitstellung wenigstens eines Assistenzsystems zum Betrieb und/oder der Inbetriebnahme des Anbaugerätes. Ein Beispiel für ein entsprechendes Assistenzsystem während der Inbetriebnahme als auch während des laufenden Betriebs des Anbaugerätes ist eine Einrichteautomatik zur Ausrichtung des eingespannten Rohres. Bei der Pfahlgründung wird das Rohr regelmäßig vertikal im rechten Winkel zur Erdoberfläche in das Erdreich eingebracht. In Ausnahmefällen wird bei sogenannten Schrägpfahlen ein entsprechender Neigungswinkel gegenüber der Horizontalen bzw. der Erdoberfläche eingestellt. Die Kinematik des Anbaugerätes, insbesondere ein Tisch zum Einspannen des Rohres kann durch ein oder mehrere Aktoren verfahren werden, um die Rohrneigung anzupassen. Das integrale Steuergerät des Anbaugerätes kann derart konfiguriert sein, sodass eine assistierte Einstellung der Pfahlneigung durch Betätigung der passenden Aktoren des Anbaugerätes ausgeführt wird. Bspw. ist lediglich die Eingabe des gewünschten Soll-Winkels des Rohres notwendig, das Steuergerät führt dann die notwendigen Operationen vollautomatisiert aus, um die gewünschte Neigung initial einzustellen und/oder während der Einbringung des Rohres zu kontrollieren und bedarfsweise zu korrigieren. Hierbei kann das Steuergerät auf Sensorwerte der am Anbaugerät verbauten Sensorik zurückgreifen. Von besonderer Bedeutung ist ein Sensor zur Erfassung der Tischneigung des Anbaugerätes.

Weiterhin kann als Assistenzsystem eine automatisierte Tiefenmessung der Verrohrung durch das Steuergerät ausgeführt werden. Bei der automatisierten Tiefenmessung werden durch das Steuergerät Vertikalbewegungen des Tisches sensorisch erfasst. Durch Summation der Einzelmessungen kann das Steuergerät die bereits erzielte Verrohrungstiefe ermitteln. Für die Tiefenmessung werden insbesondere Messwerte eines an der Lenkstange befestigten Neigungssensors und/oder Winkelgebers berücksichtigt. Eine weitergehende optionale Möglichkeit des Steuergerätes besteht darin, ausgehend von der ermittelten Verrohrungstiefe den möglichen Fertigstellungszeitpunkt der Verrohrung vorherzusagen. Der Bediener könnte dann frühzeitig über ein Anzeigeelement darauf hingewiesen werden. Eine solche Prädiktion erleichtert die Koordination nachfolgender Prozessschritte während der Pfahlgründung, wie beispielsweise das rechtzeitige Anliefern und Einbringen des notwendigen Betons. Zur Optimierung der Prädiktionsqualität kann das Steuergerät auch vorangegangene Pfahlgründungsvorgänge in der Umgebung berücksichtigen, die üblicherweise eine qualitative Aussage zur Bodenbeschaffenheit zulassen. Die Zusammensetzung des Erdreiches ist nämlich ein Einflussfaktor auf die erreichbar maximale Vorschubgeschwindigkeit während des Verrohrungsprozesses. Ergänzend könnte das Steuergerät die aktuelle Leistungsaufnahme in die Prädiktion aufnehmen. Denkbar ist es ebenfalls, dass am Anbaugerät Bodenprofile mit Informationen zur Bodenzusammensetzung eingebbar sind und das Steuergerät zur Prädiktion Zugriff auf solche Bodenprofile hat. Alternativ könnten diese auch bedarfsweise über die Sende- und/oder Empfangseinheit von extern abgerufen werden.

In einer weiter vorteilhaften Ausgestaltung der Erfindung kann das Steuergerät derart konfiguriert sein, um eine automatische Anforderung zur Erhöhung und/oder Verringerung der von einer Trägermaschine bereitgestellten hydraulischen bzw. pneumatischen und/oder elektrischen Leistung über die Kommunikationsschnittstelle an die Trägermaschine zu übermitteln. Hierzu ist das Steuergerät geeignet, den aktuellen prozessabhängigen Leistungsbedarfs des Anbaugerätes zu bestimmen und davon abhängig eine solche Anforderung zu generieren und über die Kommunikationsschnittstelle an die Trägermaschine zu übermitteln. Der gesamte Verrohrungsprozess des Anbaugerätes setzt sich bspw. aus zyklisch wiederkehrenden Einzelschritten zusammen, die sich unter anderem in der erforderlichen Energieaufnahme voneinander unterscheiden. Das Steuergerät kann je nach anstehendem Einzelschritt die benötigte Energie von der Trägermaschine anfordern.

Weitere mögliche Steuerungsfunktionen, die durch die Logik des Steuergerätes selbsttätig ausgeführt werden, sind beispielsweise automatische Bewegungsabläufe für eine Oszillier-Automatik und/oder Rohr-Zieh-Automatik. Unter der Oszillierbewegung wird eine oszillierende Rotationsbewegung des eingespannten Rohres bei einer Verrohrungsmaschine verstanden. Hierbei wird das Rohr abwechselnd in gegenläufige Drehrichtungen rotiert, um eine Bohrbewegung zur Einbringung der Verrohrung in das Erdreich zu erreichen. Zur Ausführung der Oszillierbewegung sind bevorzugt Oszillierzylinder vorgesehen, die durch abwechselnde Kolbenbewegungen die entsprechenden Rotationsbewegungen bewirken. Der Anteil an Energie, der in ein Drehmoment der Verrohrung umgewandelt werden kann (Wirkungsgrad), ist abhängig von der Stellung der beiden Oszillierzylinder. Bei einem kleinen maximalen Oszillierwinkel ist der Wirkungsgrad hoch. Je größer der maximale Oszillierwinkel ist, desto geringer wird der Wirkungsgrad aufgrund der Geometrie der Verrohrungsmaschine. Der optimale, maximale Oszillierwinkel ergibt sich als Funktion der aktuell erreichten Verrohrungstiefe. Insbesondere ist bei geringer Bohrtiefe ein kleiner Oszillierwinkel optimal, während bei fortschreitenden Bohrtiefen größere Oszillierwinkel aufgrund einer maximal möglichen Axialverformung bevorzugt werden. Der Logik des Steuerungsgerätes ist dieser Zusammenhang bekannt und diese ist vorzugweise derart konfiguriert, dass in Abhängigkeit der erfassten Verrohrungstiefe der optimale Oszillierwinkel eingestellt wird. Bevorzugt erhöht das Steuergerät also mit fortschreitender Verrohrungstiefe automatisch den eingestellten Oszillierwinkel.

Ähnliches gilt bei einer sogenannten Rohr-Ziehautomatik, mittels dieser die vorab eingebrachten Rohre nach dem Einfüllen des Betons aus dem Erdreich entfernt werden sollen.

Ferner kann vorgesehen sein, dass das Steuergerät wenigstens einen Speicher umfasst oder mit einem solchen Speicher verbindbar ist, um eine kontinuierliche Datenaufzeichnung während des Arbeitsbetriebs des Anbaugerätes auszuführen. Hierbei werden Daten aufgezeichnet, die zum einen durch die Sensoren bereitgestellt werden, weiter sind hierunter auch Auswertedaten zu verstehen, die sich durch die Ausführung etwaiger Steuerungsfunktionen als auch die Auswertung der Sensordaten ergeben.

Über die verbaute Sende- und/oder Empfangseinheit können solche Daten auch über das Mobilfunknetz an einen externen Server übertragen werden, der diese abspeichert und verwaltet. Über weitere Geräte kann dann auf den Server zugegriffen werden, um somit Daten direkt und baustellenfern abzufragen. Dies bringt mehrere Verbesserungen mit sich, so zum Beispiel eine Zeitersparnis durch direkte Datenabfrage für zum Beispiel den Baustellenleiter. Ferner lässt dies eine effizientere Dokumentation der Arbeitsprozesse zu und erhöht somit auch die Arbeitsqualität durch direkten Datenzugang.

Neben dem erfindungsgemäßen Anbaugerät betrifft die Erfindung zudem ein System bestehend aus einer Trägermaschine, insbesondere einem Seilbagger oder einem Bohrgerät, und einem montierten Anbaugerät gemäß der vorliegenden Erfindung. Demzufolge ergeben sich für das System dieselben Vorteile und Eigenschaften, wie sie bereits vorstehend anhand des erfindungsgemäßen Anbaugerätes ausführlich diskutiert wurden. Auf eine wiederholende Beschreibung wird demzufolge verzichtet.

Weitere Vorteile und Eigenschaften der Erfindung sollen im Folgenden anhand eines in den Figuren dargestellten Ausführungsbeispiels näher erläutert werden. Es zeigen:
- Figur 1:: eine skizzierte Seitenansicht des erfindungsgemäßen Systems bestehend aus einem Seilbagger sowie der erfindungsgemäßen Verrohrungsmaschine und
- Figuren 2a, 2b:: eine Seiten- und Draufsicht auf die erfindungsgemäße Verrohrungsmaschine.

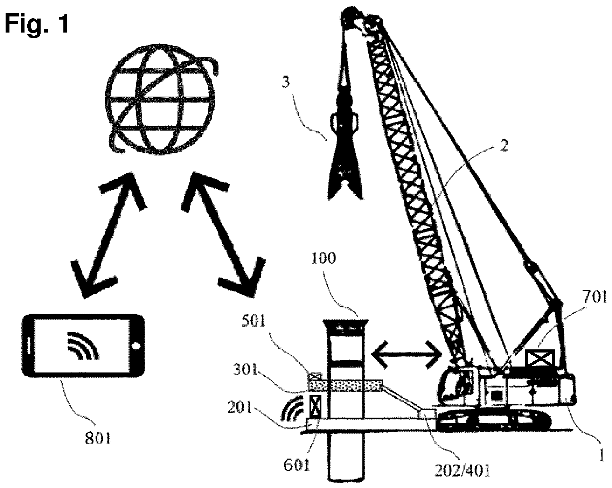

Beim Greiferbohren mit einer Verrohrungsmaschine arbeiten zwei an und für sich unabhängige Geräte, nämlich ein Seilbagger 1 sowie das Anbaugerät des Seilbaggers 1 in Form der Verrohrungsmaschine, gemeinsam am Erstellen eines Pfahls. Wie in der Figur 1 beispielhaft dargestellt ist, übernimmt der Seilbagger 1 mit einem drehbaren Oberwagen, einem Ausleger 2 und einem Greifer 3 das Ausgraben eines Lochs. Am Seilbagger 1 angebaut ist eine Verrohrungsmaschine bestehend aus einer Bodenplatte 201 und einem gegenüber der Bodenplatte 201 im Abstand verstellbaren Tisch 301. Mit dieser Verrohrungsmaschine kann eine Verrohrung 100 folgendermaßen in den Boden eingetrieben werden. Der Tisch 301 wird beispielsweise mithilfe eines Spannzylinders mit der Verrohrung 100 verriegelt. Anschließend wird die Bodenplatte 201 angehoben, wodurch die Gewichtskraft der Verrohrung 100, des Tisches 301 und der Bodenplatte 201 nach unten wirkt. Um die Haftreibung zu überwinden, wird in einem weiteren Schritt der Tisch 301 in Bewegung versetzt, beispielsweise in horizontalen Oszillationen (sogenannte Verrohrungsmaschinen) oder auch in eine kontinuierliche Rotation (sogenannte Rohrdrehmaschinen). Durch dieses Zusammenspiel senkt sich die Verrohrung 100 in den Boden, während der Seilbagger 1 das Erdreich innerhalb der Verrohrung ausbaggert.

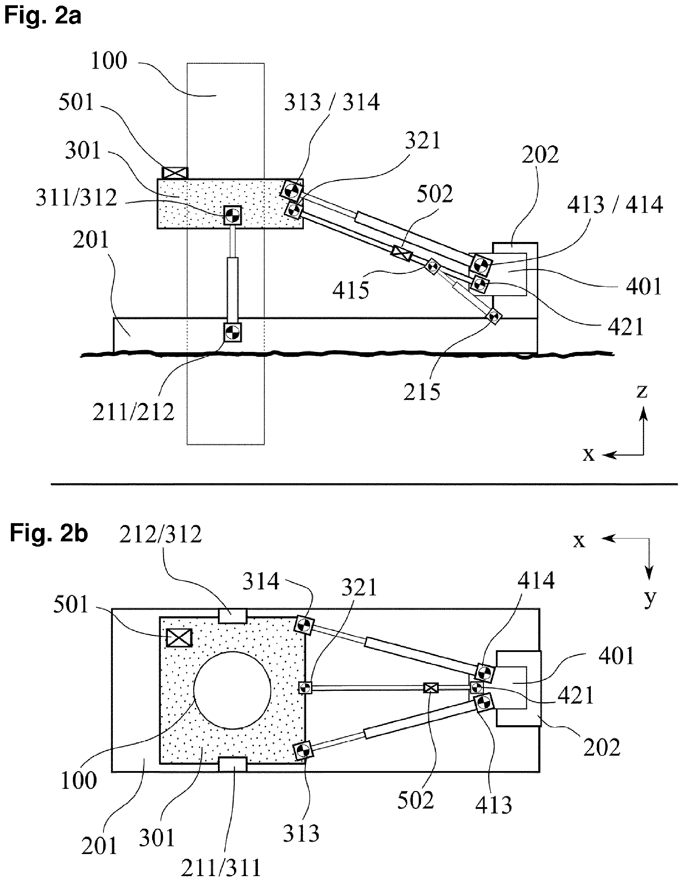

Mit mehr Details ist die Verrohrungsmaschine in den Figuren 2a, 2b dargestellt, die die Verrohrungsmaschine mit der Verrohrung 100 in einer Seiten- und Draufsicht zeigen. Der Tisch kann beispielsweise mittels Klemmen mit dem Rohr 100 verklemmt werden. Die Bodenplatte 201 kann über Hubzylinder zwischen den Verbindungsstellen 211/311 und 212/312 angehoben werden. Durch synchronisierte Bewegungen der beiden Oszillationszylinder zwischen den Verbindungsstellen 313/413 und 314/414 kann der Tisch 301 gegenüber der Bodenplatte 201 Drehbewegungen ausführen. Eine starre Lenkstange ist einerseits im Punkt 321 gelenkig am Tisch 301 und andererseits im Punkt 421 gelenkig am Element 401 montiert. Durch Bewegung eines Lenkzylinders, der einerseits im Punkt 415 gelenkig mit der Lenkstange und andererseits gelenkig im Punkt 215 an der Bodenplatte 201 montiert ist, lässt sich die Neigung der Verrohrung 100 um die y-Achse einstellen. Dadurch unterschiedliche Hubhöhe der beiden Hubzylinder kann die Neigung der Verrohrung 100 um die x-Achse eingestellt werden. Die Drehpunkte 413, 414 sowie 421 lassen sich mittels der Führung 401 horizontal gegenüber dem fix mit dem Tisch 201 verbundenen Aufbau 202 verschieben. Ein Neigungssensor 501, der am Tisch 301 befestigt ist, erfasst die aktuelle Neigung des Tischs 301. Der an der Lenkstange installierte Neigungssensor 502 erfasst die aktuelle Neigung der Lenkstange. Die hydraulische und elektrische Energie für den Betrieb der Verrohrungsmaschine wird durch die Trägermaschine 1 bereitgestellt.

Die gezeigte Verrohrungsmaschine umfasst weiterhin ein Steuergerät, das die Messwerte der Sensoren 501, 502 empfängt, auswertet und für die Ansteuerung der Aktoren, d.h. der Hubzylinder, des Lenkzylinders, der Klemmzylinder sowie der Oszillierzylinder berücksichtigt. Steuerungsrelevante Daten lassen sich zudem über ein Anzeigemittel der Verrohrungsmaschine während der Laufzeit ausgeben. Mit Hilfe des Steuergerätes kann die Verrohrungsmaschine eigenständig Steuerungsaufgaben wahrnehmen und intelligente Funktionen wie Assistenzsysteme ausführen. Ebenso stehen Funktionen zur Kommunikation mit der Trägermaschine 1 sowie einem (Maschinendaten-)Server zur Verfügung. Es können Maschinendaten unabhängig von der Trägermaschine 1 gesammelt und an einen Server übertragen werden. Eine Abfrage von Maschinendaten soll dadurch baustellenfern und unkompliziert ermöglicht werden.

Eine Anzeige von (ausgewerteten) Daten soll (auf dem Bedienpult) für den Bediener dargestellt werden. Dies soll zudem verschiedene Assistenzfunktionen und automatisierte Abläufe unabhängig von der Trägermaschine 1 ermöglichen.

Ermöglicht werden u. A.:
- Eigenständige Tiefenmessung der Verrohrung/des Bohrrohres und Prädikation der Fertigstellung des Pfahls über Monitoring der Tiefe.
- eine automatische Anforderung bzw. Verringerung hydraulischer Leistung abhängig vom prozessabhängigen Bedarf der VRM und der Verfügbarkeit an der Trägermaschine 1.
- automatische Bewegungsabläufe wie eine Oszillier-Automatik, Rohr-Zieh-Automatik und weitere automatisiert durchgeführte Abfolgen, die auch gestoppt werden können, wenn bspw. ein bestimmter Parameter erreicht ist. Zusätzlich erfolgt die Ermittlung des optimalen Oszillierwinkels als Funktion der Tiefe.
- Einrichteautomatik: Die Ausrichtung der Vertikalität des Rohres 100 geschieht durch eine interne Logik des Steuergerätes.

Durch das Steuergerät auf dem Anbaugerät wird erstmals die Verarbeitung von Ansteuersignalen einer Trägermaschine 1 möglich. Auf der Trägermaschine 1 können somit vorhandene Bedienelemente (Masterschalter, Maschinendisplay,...) genutzt werden.

Über einen CAN-Bus wird die Kommunikation zwischen VRM und Trägermaschine 1 ermöglicht. Hierbei senden und empfangen die jeweiligen Steuergeräte Daten, welche zudem zu kombinierten Auswertungen genutzt werden können. Durch diese Verbindung werden dem Bediener (Bediener in Kabine + Bediener außerhalb mit Bedienpult) direkt Informationen von Anbau- und Trägermaschine 1 dargestellt, wodurch die Arbeit effizienter gestaltet wird. Auf dem Bedienpult der Trägermaschine 1 werden die übertragenen Daten graphisch und gegebenenfalls konvertiert dargestellt.

Das Steuergerät der VRM in Verbindung mit einer eigenständigen Sende- und Empfangseinheit der VRM sorgen für eine Datenübertragung über das Mobilfunknetz an einen externen Server, der diese abspeichert und verwaltet.

Über weitere Geräte 801 kann auf diesen Server zugegriffen werden und somit Daten direkt und baustellenfern abgefragt werden. Dies bringt mehrere Verbesserungen mit sich:
- Zeitersparnis durch direkte Datenabfrage für z.B. Baustellenleiter
- Effizientere Dokumentation
- Erhöhte Arbeitsqualität durch direkten Datenzugang

Um eine lückenlose Datenaufzeichnung zu gewährleisten, ist eine temporäre und dauerhafte Datenspeicherung in der VRM durch wenigstens ein Speicherelement möglich. Hiermit lassen sich wichtige Informationen, wie z. B. der Lebensdauerverbrauch einzelner Komponenten, sichern, unabhängig davon, an welcher Trägermaschine 1 das Anbaugerät aktuell zum Einsatz kommt. Die gespeicherten Daten stehen zudem für Auswertungen zur Verfügung und stellen somit eine Grundlage für z.B. Automatisierung und Assistenzsysteme dar.

Die Datenmessung findet direkt am Anbaugerät statt, wodurch eine hohe Vielfalt an Daten erfasst werden und zudem eine hohe Messgenauigkeit erzielt werden kann. Es wird eine lückenlose Maschinen- und Prozessdatenaufzeichnung - unabhängig von Betriebsart (Fremdgerät, Powerpack, eigenes Gerät) - durch das integrierte Steuergerät gewährleistet, welches selbstständig die Aufzeichnung und Überwachung steuert.

Durch das Steuergerät wird zudem eine Selbstüberwachung der VRM ermöglicht. Mit Hilfe der aufgezeichneten Daten und deren Auswertung lassen sich viele Verbesserungen am Gesamtprozess "Einbringen eines Rohres in den Boden" erzielen. Durch Automatisierungen können Prozesse präziser und schneller ablaufen und der Bediener wird von Arbeitslast befreit. Des Weiteren werden Prozessabläufe mit Hilfe von Assistenzsystemen unterstützt, wodurch die Prozessqualität erhöht und der Bedienaufwand verringert wird. Fehlbedienungen werden stark reduziert bzw. ausgeschlossen. Das integrierte Steuergerät kann zudem z. B. für Prognosen oder Priorisierung von Arbeitsvorgängen genutzt werden. Es verbessert sich insgesamt die Sicherheit am Arbeitsplatz, da die Tätigkeiten im Gefahrenbereich (Bereich am und um das Anbaugerät) reduziert werden.

Über ein Monitoring der Tiefe kann eine Prädiktion erstellt werden, wann der Pfahl fertiggestellt wird um z.B. die Betonanlieferung für den Pfahl zeitlich einzugrenzen. In weiterer Folge kann durch eine Aufzeichnung von "Bodenprofilen" benachbarter Pfähle diese Prädiktion genauer vorgenommen werden. Diese zeigen z.B. die Festigkeit des Bodens als Funktion der Tiefe auf.

Bei einer Änderung der Drehrichtung der VRM geschieht folgendes: die Drehung der Verrohrung 100 stoppt, die beiden Oszillierzylinder ändern ihre Hubrichtung. Anfangs wirkt eine Haftreibung zwischen Rohr und Boden, die im Allgemeinen höher ist als die Gleitreibung. Sobald die Haftreibung über die gesamte Verrohrung 100 überwunden ist, dreht sich das Rohr 100 über die gesamte Länge, es wirkt nur noch die Gleitreibung. Nun wird die Verrohrung 100 durch ihr Eigengewicht sowie das zusätzliche Gewicht der VRM weiter in den Boden eingebracht. Folgende Effekte beeinflussen dieses Verhalten:
- Der Anteil an Energie, der in ein Drehmoment der Verrohrung 100 umgewandelt werden kann (Wirkungsgrad), ist abhängig von der Stellung der beiden Oszillierzylinder. Bei einem kleinen maximalen Oszillierwinkel ist der Wirkungsgrad hoch. Je größer der maximale Oszillierwinkel ist, desto geringer wird der Wirkungsgrad aufgrund der Geometrie der VRM.
- Diesem Verhalten entgegen wirkt einerseits ein geringer Schlupf zwischen den einzelnen Elementen der Verrohrung 100, aber auch eine mögliche axiale Verformung über die gesamte Länge der Verrohrung 100. Bei einer langen Verrohrung kann es vorkommen, dass die Rohre 100 an der Erdoberfläche bereits drehen, diese Drehung aber ganz unten an der Spitze nicht ankommt.
- Man erkennt: der optimale, maximale Oszillierwinkel ist also eine Funktion der Tiefe. Während bei geringer Bohrtiefe ein kleiner Oszillierwinkel aufgrund des Wirkungsgrades optimal ist, wird bei großen Bohrtiefen ein großer Oszillierwinkel aufgrund einer möglichen axialen Verformung optimal.

Der Energieaufwand kann also einerseits wie im vorherig beschriebenen Abschnitt durch Einstellen der Energieverteilung optimiert werden, als zweiter Parameter lässt sich auch der maximale Oszillierwinkel als Funktion der Tiefe einstellen.

Nachfolgend ein kurzes Anwendungsbeispiel für den Einsatz der VRM zur Pfahlgründung:
Eine VRM, welche an einem Seilbagger 1 angebracht ist, wird von einem Bediener im Führerhaus oder einem Bediener mit Bedienpult gesteuert. Die VRM besitzt ein integriertes Steuergerät, das als Grundlage für Automatisierung und Assistenzsysteme verwendet wird. Durch die Datenaufzeichnung und Kommunikation (Datenaustausch) der Steuergeräte der VRM sowie des Seilbaggers 1, können maschinen- und prozessbezogene Daten dem Bediener dargestellt werden. Durch die Verknüpfung der Daten ist auch eine kombinierte Auswertung und Darstellung der Daten möglich. Über eine Verbindung zu einem Server werden aufgenommene und ausgewertete Daten von VRM und Seilbagger 1 gesendet. Auf diesen Server kann z.B. der Baustellenleiter an dessen Mobilgerät 801 die Daten einsehen und somit den Arbeitsablauf überwachen, ohne direkt vor Ort und Stelle sein zu müssen. Durch die digitale Darstellung der Daten können einige Prozesse der manuellen Datenaufnahmen (Wasserwaage zur Messung der vertikalen Abweichung des Rohres 100, Einbringtiefe ablesen, usw.) reduziert werden.

## Patentansprüche

1. Anbaugerät für Bohr- und/oder Gründungsarbeiten, insbesondere Verrohrungsmaschine oder Rohrdrehmaschine, das an einer Trägermaschine, insbesondere einem Seilbagger (1) oder Bohrgerät, montiertbar ist, wobei das Anbaugerät mit einer Aufnahmevorrichtung (301) zum Einspannen wenigstens eines Rohres (100) und einem Antrieb zur Erzeugung einer Rotationsbewegung des eingespannten Rohres (100) ausgestattet ist,
**dadurch gekennzeichnet,**
**dass** das Anbaugerät wenigstens ein integrales Steuergerät mit Steuerlogik zur selbständigen Ausführung wenigstens einer Steuerungsfunktion des Anbaugerätes und wenigstens eine Kommunikationsschnittstelle zur Kommunikation mit einem Steuergerät der Trägermaschine umfasst, wobei das Steuergerät des Anbaugerätes über die Kommunikationsschnittstelle maschinenrelevante Parameter einer Trägermaschine abruft und maschinenrelevante Parameter des Anbaugerätes über die Kommunikationsschnittstelle bereitstellt.

2. Anbaugerät nach Anspruch 1, **dadurch gekennzeichnet, dass** das Anbaugerät ein oder mehrere Sensoren (501, 502) umfasst, deren Sensordaten durch das Steuergerät auslesbar und auswertbar sind und für die Ausführung der Steuerungsfunktionen berücksichtigt werden.

3. Anbaugerät nach einem der vorstehenden Ansprüche, **dadurch gekennzeichnet, dass** über die Kommunikationsschnittstelle Steuerbefehle zur Ansteuerung des Anbaugerätes empfangbar sind und durch das Steuergerät interpretierbar sind, um ein oder mehrere Aktoren des Anbaugerätes anzusteuern und/oder Steuerungsfunktion des Steuergerätes auszuführen.

4. Anbaugerät nach einem der vorhergehenden Ansprüche, **dadurch gekennzeichnet, dass** das Anbaugerät wenigstens ein Anzeigeelement zur Wiedergabe maschinenrelevanter bzw. steuerungsrelevanter Daten und/oder über die Kommunikationsschnittstelle abgerufener Daten umfasst.

5. Anbaugerät nach einem der vorhergehenden Ansprüche, **dadurch gekennzeichnet, dass** wenigstens eine Sende- und Empfangseinheit vorgesehen ist, um eine drahtlose und/oder drahtgebundene Kommunikation, vorzugsweise über ein Mobilfunknetz, mit wenigstens einem externen Gerät zu ermöglichen, wobei bevorzugt maschinen- und/oder steuerungsrelevante Parameter des Anbaugerätes über die Sendeeinheit an einen externen Server übermittelbar sind.

6. Anbaugerät nach einem der vorhergehenden Ansprüche, **dadurch gekennzeichnet, dass** eine elektrische und/oder hydraulische und/oder pneumatische Versorgung des Anbaugerätes über eine Schnittstelle durch die Trägermaschine bereitstellbar ist.

7. Anbaugerät nach einem der vorhergehenden Ansprüche, **dadurch gekennzeichnet, dass** wenigstens eine Steuerungsfunktion die Bereitstellung wenigstens eines Assistenzsystems zum Betrieb und/oder Inbetriebnahme des Anbaugerätes ist.

8. Anbaugerät nach Anspruch 7, **dadurch gekennzeichnet, dass** das Steuergerät konfiguriert ist, eine assistierte Einstellung der Pfahlneigung auszuführen, während dieser das Steuergerät ein oder mehrere Aktoren zur Einstellung der Soll-Rohrneigung unter Berücksichtigung von Sensorwerten ansteuert.

9. Anbaugerät nach Anspruch 7 oder 8, **dadurch gekennzeichnet, dass** das Steuergerät konfiguriert ist, als Assistenzsystem eine automatisierte Tiefenmessung der Verrohrung/des Bohrrohres auszuführen und optional eine Prädiktion bezüglich der Fertigstellung des Pfahls zu erstellen und auszugeben.

10. Anbaugerät nach einem der vorhergehenden Ansprüche, **dadurch gekennzeichnet, dass** das Steuergerät konfiguriert ist, eine automatische Anforderung zur Erhöhung und/oder Verringerung der von einer Trägermaschine bereitgestellten hydraulischen Leistung in Abhängigkeit des prozessabhängigen Leistungsbedarfs des Anbaugerätes zu erzeugen und über die Kommunikationsschnittstelle zu übermitteln.

11. Anbaugerät nach einem der vorhergehenden Ansprüche, **dadurch gekennzeichnet, dass** wenigstens eine Steuerungsfunktion die Steuerung automatischer Bewegungsabläufe zur Oszillier-Automatik und/oder Rohr-Zieh-Automatik ist.

12. Anbaugerät nach einem der vorhergehenden Ansprüche, **dadurch gekennzeichnet, dass** das Steuergerät wenigstens einen Speicher umfasst oder mit diesem verbindbar ist, um eine kontinuierliche Datenaufzeichnung während des Arbeitsbetriebs des Anbaugerätes auszuführen.

13. System bestehend aus einer Trägermaschine, insbesondere Seilbagger (1) oder Bohrgerät, und einem montierten Anbaugerät gemäß einem der vorhergehenden Ansprüche.

## Claims

1. An attachment for drilling and/or foundation work, in particular a casing oscillator or a casing rotator, that can be installed at a base machine, in particular a cable excavator (1) or a drilling rig, wherein the attachment is equipped with a reception apparatus (301) for clamping at least one pipe (100) and a drive for generating a rotational movement of the clamped pipe (100),
**characterized in that**
the attachment comprises at least one integral control unit having a control logic for an independent carrying out of at least one control function of the attachment and at least one communication interface for communication with a control unit of the base machine, with the control unit of the base machine invoking machine-relevant parameters of a base machine via the communication interface and providing machine-relevant parameters of the attachment via the communication interface.

2. An attachment in accordance with claim 1, **characterized in that** the attachment comprises one or more sensors (501, 502) whose sensor data can be read and evaluated by the control unit and can be taken into account for the carrying out of the control functions.

3. An attachment in accordance with one of the preceding claims, **characterized in that** control commands for controlling the attachment can be received via the communication interface and can be interpreted by the control unit to control one or more actuators of the attachment and/or to carry out control functions of the control unit.

4. An attachment in accordance with one of the preceding claims, **characterized in that** the attachment comprises at least one display element for reproducing machine-relevant or control-relevant data and/or data invoked via the communication interface.

5. An attachment in accordance with one of the preceding claims, **characterized in that** at least one transmission and reception unit is provided to enable a wireless and/or wired communication, preferably via a cellular radio network, with at least one external unit, with machine-relevant and/or control-relevant parameters of the attachment preferably being able to be transmitted to an external server via the transmission unit.

6. An attachment in accordance with one of the preceding claims, **characterized in that** an electric and/or hydraulic and/or pneumatic supply of the attachment can be provided via an interface by the base machine.

7. An attachment in accordance with one of the preceding claims, **characterized in that** at least one control function is the provision of at least one assistance system for operation and/or putting into operation of the attachment.

8. An attachment in accordance with claim 7, **characterized in that** the control unit is configured to carry out an assisted setting of the pile inclination during which the control unit controls one or more actuators to set the desired pipe inclination while taking account of sensor values.

9. An attachment in accordance with claim 7 or claim 8, **characterized in that** the control unit is configured to carry out an automated depth measurement of the casing/of the drilling pipe as an assistance system and optionally to prepare and output a prediction with respect to the completion of the pile.

10. An attachment in accordance with one of the preceding claims, **characterized in that** the control unit is configured to generate an automatic request to increase and/or to decrease the hydraulic power provided by a base machine in dependence on the process-dependent power requirement of the attachment and to transmit it via the communication interface.

11. An attachment in accordance with one of the preceding claims, **characterized in that** at least one control function is the control of automatic movement routines for the automatic oscillating system and/or the automatic pipe drawing device.

12. An attachment in accordance with one of the preceding claims, **characterized in that** the control unit comprises or is connectable to at least one memory to carry out a continuous data recording during the work operation of the attachment.

13. A system comprising a base machine, in particular a cable excavator (1) or a drilling rig, and an installed attachment in accordance with one of the preceding claims.

## Revendications

1. Équipement pour travaux de forage et/ou de fondation, en particulier machine à tuber ou foreuse rotative, qui peut être monté sur un engin porteur, en particulier une pelle à câbles (1) ou un engin de forage, l'équipement étant muni d'un dispositif de réception (301) pour le serrage d'au moins un tube (100) et d'un entraînement pour générer un mouvement de rotation du tube (100) serré,
**caractérisé en ce que**
l'équipement comprend au moins un appareil de commande intégré doté d'une logique de commande pour l'exécution automatique d'au moins une fonction de commande de l'équipement et au moins une interface de communication pour la communication avec un appareil de commande de l'engin porteur, l'appareil de commande de l'équipement appelant des paramètres liés à la machine d'un engin porteur par le biais de l'interface de communication et fournissant des paramètres liés à la machine de l'équipement par le biais de l'interface de communication.

2. Équipement selon la revendication 1, **caractérisé en ce que** l'équipement comprend un ou plusieurs capteurs (501, 502), dont les données de capteur peuvent être extraites et évaluées par l'appareil de commande et être prises en compte pour l'exécution des fonctions de commande.

3. Équipement selon l'une des revendications précédentes, **caractérisé en ce que** des instructions de commande pour la commande de l'équipement peuvent être reçues par le biais de l'interface de communication et peuvent être interprétées par l'appareil de commande, pour commander un ou plusieurs actionneurs de l'équipement et/ou exécuter une fonction de commande de l'appareil de commande.

4. Équipement selon l'une des revendications précédentes, **caractérisé en ce que** l'équipement comprend au moins un élément d'affichage pour visualiser des données liées à la machine ou liées à la commande et/ou des données appelées par le biais de l'interface de communication.

5. Équipement selon l'une des revendications précédentes, **caractérisé en ce qu'**au moins une unité d'émission et de réception est prévue, pour permettre une communication sans fil et/ou par câble, de préférence par le biais d'un réseau de téléphonie mobile, avec au moins un appareil externe, des paramètres liés à la machine et/ou liés à la commande de l'équipement pouvant de préférence être transmis à un serveur externe par le biais de l'unité d'émission.

6. Équipement selon l'une des revendications précédentes, **caractérisé en ce qu'**une alimentation électrique et/ou hydraulique et/ou pneumatique de l'équipement peut être fournie par l'engin porteur par le biais d'une interface.

7. Équipement selon l'une des revendications précédentes, **caractérisé en ce qu'**au moins une fonction de commande est la mise à disposition d'au moins un système d'assistance au fonctionnement et/ou à la mise en service de l'équipement.

8. Équipement selon la revendication 7, **caractérisé en ce que** l'appareil de commande est configuré pour exécuter un réglage assisté de l'inclinaison de pieu, pendant lequel l'appareil de commande commande un ou plusieurs actionneurs pour le réglage de l'inclinaison de tube théorique en tenant compte de valeurs de capteurs.

9. Équipement selon la revendication 7 ou 8, **caractérisé en ce que** l'appareil de commande est configuré pour exécuter, comme système d'assistance, une mesure automatique de la profondeur du tubage / du tube de forage et, en option, établir et donner une prédiction concernant l'achèvement du pieu.

10. Équipement selon l'une des revendications précédentes, **caractérisé en ce que** l'appareil de commande est configuré pour générer une demande automatique d'augmentation et/ou de réduction de la puissance hydraulique fournie par un engin porteur en fonction du besoin en puissance, dépendant du processus, de l'équipement et à transmettre celle-ci par le biais de l'interface de communication.

11. Équipement selon l'une des revendications précédentes, **caractérisé en ce qu'**au moins une fonction de commande est la commande d'enchaînements automatiques de mouvements pour l'automatisme d'oscillation et/ou l'automatisme d'extraction de tube.

12. Équipement selon l'une des revendications précédentes, **caractérisé en ce que** l'appareil de commande comprend au moins une mémoire ou peut être relié à celle-ci pour exécuter un enregistrement continu de données pendant le fonctionnement opérationnel de l'équipement.

13. Système constitué d'un engin porteur, en particulier une pelle à câbles (1) ou un engin de forage, et d'un équipement monté selon l'une des revendications précédentes.
